# DEMANDE DE BREVET EUROPEEN

(11) **EP 1 696 157 A2**
(43) Date de publication de la demande: **30.08.2006**
(21) Numéro de dépôt: 06290227.5
(22) Date de dépôt: 09.02.2006
(51) Int. Cl.: F16K 1/226

(54) **Robinet**

(30) Priorité: 25.02.2005 FR 0501941
(71) Demandeur: KSB S.A.S, 92230 Gennevilliers (FR)
(72) Inventeur: Wattignier, Claude, 33400 Talence (FR); Vinzio, Pascal, 33320 Eysines (FR)
(74) Mandataire: Eidelsberg, Victor Albert

(57) **Abrégé**

Dans ce robinet le siège comprend deux lèvres (8) d'étanchéité dont le bord libre effilé est ramené vers l'intérieur de la gorge (6) par contact avec la face latérale de la gorge (6) et qui sont dirigés dans le sens opposé à celui allant vers le fond de la gorge (6).

## Description

La présente invention se rapporte aux robinets dits " à papillon décalé".

Dans un robinet à papillon décalé, l'axe de rotation du papillon en forme de disque est décalé par rapport au plan du papillon et est parallèle à ce plan. L'axe de rotation est aussi excentré par rapport à l'axe de la tuyauterie.

La combinaison du décalage et de l'excentration éliminent le frottement entre le siège (joint) et la portée d'étanchéité lors de l'ouverture et de la fermeture du robinet. En conséquence, le robinet conserve ses caractéristiques d'étanchéité après un très grand nombre de manoeuvres, ces caractéristiques restant conformes aux normes et spécifications les plus exigeantes. C'est pourquoi, on utilise beaucoup les robinets à papillon décalé dans le domaine de la haute pression, ainsi que dans le domaine de l'eau (adduction).

Les robinets à papillon décalé sont dotés d'un siège qui peut être réalisé en un matériau plastomère ou élastomère ou composite. Ce siège permet de réaliser la fonction d'étanchéité amont/aval lors de la fermeture du papillon. Il coopère avec une portée d'étanchéité située sur la pièce opposée pour réaliser l'étanchéité du robinet lorsque ce dernier est fermé. Cette fonction est obtenue par l'application d'une pression de contact siège/portée d'étanchéité, supérieure à la pression du fluide véhiculé. Le siège peut être rendu solidaire du corps ou du papillon.

Ce type de robinet est préférentiellement utillisé pour les grands diamètres de tuyauteries et le siège peut ainsi être démonté in situ par un opérateur sans démonter le robinet de l'installation. La fixation du joint se fait généralement à l'aide d'une bride bloquée par des clames ou d'une bride appliquée par des vis. Selon d'autres modes de réalisation, le siège est parfois scellé par l'injection d'une résine polymérisable.

Ce montage du siège ou joint nécessite la manipulation d'une pièce lourde, rendant les opérations de maintenance in situ difficiles et pénibles lorsqu'il faut le remplacer. Il en est de même lorsque le cas échéant il faut détruire les scellements et remettre les pièces en état pour remonter un nouveau siège.

En outre, il est important qu'en position fermée, le jeu entre le corps et le papillon soit petit à l'aval du joint, (côté opposé à la pression) afin que le joint ne s'extrude pas dans le jeu sous l'effet de la pression. Le joint est disposé dans une gorge parallèle au plan du papillon et de ce fait la géométrie de l'interface entre le bord du papillon et la partie à l'opposée sur le corps est dissymétrique vis à vis du plan de symétrie du siège lui-même. De ce fait, le comportement et la performance d'étanchéité du siège seront différents selon le sens d'application de la pression.

Au US 6 494 466, on propose un robinet comprenant un corps tubulaire cylindrique dans une gorge ménagée sur le bord du papillon. L'expérience a montré qu'un robinet ainsi constitué présente des fuites.

L'invention remédie à cet inconvénient par un robinet à papillon décalé, qui a des performances équivalentes dans les deux directions quel que soit le sens d'application de la pression, mais qui ne fuit pas. Le robinet peut avoir un diamètre pouvant aller jusqu'à 3 m et plus et assurer une étanchéité pour des pressions comprises entre 40 et 63 bar.

L'invention a donc pour objet un robinet comprenant un corps tubulaire cylindrique et un papillon en forme de disque, monté tournant par rapport à un axe décalé par rapport au plan du papillon et parallèle à ce plan, et un siège monobloc en anneau rapporté dans une gorge annulaire fermée, donc dans un trou borgne, sur l'un de la face intérieure du corps et du bord du papillon, l'autre d'entre eux venant par une portée d'étanchéité en contact avec le siège dans une position de fermeture du robinet et s'en écartant dans une position d'ouverture, le siège comprenant deux parties latérales en saillie symétriques l'une de l'autre, caractérisé en ce que chaque partie en saillie est constituée sous la forme d'une lèvre d'étanchéité, dont le bord libre effilé est ramené vers l'intérieur de la gorge par contact avec la face latérale de la gorge et qui est dirigée dans le sens opposé à celui allant vers le fond de la gorge.

Par gorge fermée, on entend une gorge ayant un fond et non une gorge ouverte des deux côtés ou fermée d'un côté par une pièce rapportée.

Alors qu'au US 6 494 466 l'extrémité de la partie latérale en saillie est arrondie et est maintenue à distance de la face latérale de la gorge en sorte que ces parties latérales en saillie n'ont qu'une fonction de retenue du siège dans la gorge, mais non pas une fonction d'étanchéité augmentant de plus en plus au fur et à mesure que la pression du fluide susceptible d'agir sur elles augmente, suivant l'invention on a prévu deux lèvres d'étanchéité symétriques l'une de l'autre, qui assurent d'autant plus l'étanchéité que la pression du fluide qui s'y applique augmente. Les lèvres d'étanchéité ont des bords libres effilés. Non seulement elles sont en contact avec la surface latérale de la gorge auquel elles s'appliquent, mais d'elles même elles auraient tendance à s'écarter davantage encore si elles étaient libres. Lorsque du fluide sous pression vient en contact avec ces lèvres, il les applique encore plus à la paroi de la gorge et l'étanchéité se trouve ainsi assurée. Du fluide ne peut pas pénétrer en dessous des lèvres et établir une pression d'expulsion du siège hors de la gorge. Au demeurant, on explique au US6 6 494 466 qu'une injection de résine époxy est encore nécessaire pour la retenue, ce dont on se dispense suivant l'invention.

Au EP-1 284 379, on décrit non pas un robinet assurant une étanchéité au moins jusqu'à 40 bar, mais un distributeur pneumatique d'air sous relativement basse pression, par exemple de 8 bar. On décrit notamment un dispositif d'étanchéité flottant, autocentré à tout instant sur le tiroir 25. S'il n'en était pas ainsi, et si la partie caoutchouc prenait appui, non pas sur un élément mobile, mais dans le corps du distributeur, il y aurait constamment variation de l'effort de compression en fonction des efforts dynamiques de flexion qui s'exercent sur le tiroir 25. Il en résulterait des pertes d'étanchéité et si l'effort de compression était trop grand, l'électrodistributeur commandant le déplacement du tiroir pourrait s'avérer trop faible. Le dispositif d'étanchéité est nécessairement en deux parties. Il est plus coûteux et difficile à monter.

Le joint intérieur en caoutchouc s'appuie donc sur un anneau 26 périphérique rigide qui, pour être libre de se mouvoir dans son logement, doit présenter un jeu en fond de gorge et latéralement.

Suivant un perfectionnement, le siège comprend deux lobes latéraux symétriques l'un de l'autre, la distance entre le fond de la gorge et les lèvres étant plus petite que la distance entre le fond de la gorge et les lobes. De préférence, chaque lobe vient en contact avec la paroi latérale de la gorge suivant une surface. De préférence également la gorge comporte deux épaulements symétriques l'un de l'autre et les faces des lobes éloignées du fond de la gorge sont en contact avec les épaulements. Les lobes coopèrent ainsi avec les épaulements pour bien maintenir le siège à l'intérieur de la gorge et empêcher qu'il n'en soit arraché sous l'effort combiné de la pression du fluide et des frottements de la partie antagoniste, à savoir le corps lorsque le siège est inséré dans une gorge du papillon ou le papillon lorsque le siège est inséré dans une gorge du corps. On assure ainsi :
- un montage en gorge fermée dans le corps ou sur l'obturateur du robinet,
- une fonction d'étanchéité garantie par des lèvres latérales interférant avec les parois latérales de la gorge,
- une fonction anti-expulsion assurée par des lobes latéraux venant prendre appui sur l'épaulement de la gorge ; ces lobes étant capables de résister à la pleine pression en fond de gorge, au cas où l'étanchéité des lèvres se serait révélée défaillante.

De préférence, la gorge n'a comme épaulement que les deux épaulements symétriques l'un de l'autre de sorte que la gorge est ainsi sensiblement en forme de T et est facile à usiner. Une gorge à épaulements multiples telle que représentée à la figure 4 du US 6 494 466 est si compliquée à usiner qu'elle condamne industriellement un robinet de ce genre.

Suivant un mode de réalisation, le siège comporte une rainure en V, dont la pointe est tournée vers le fond de la gorge et plusieurs agrafes élastiques en V sont réparties le long de la rainure. De préférence, le prolongement imaginaire des branches du V coupe l'épaulement. Les agrafes, qui sont par exemple en métal ou en une matière plastique présentant de l'élasticité, repoussent ainsi la matière du siège vers les parois de la gorge et les branches du V s'opposent à l'expulsion du siège hors de la gorge par arc-boutement sur les épaulements.

L'invention a également pour objet un siège en une matière plastomère ou de préférence élastomère annulaire ayant une face intérieure (extérieure) cylindrique et une face extérieure (intérieure) torique comprenant deux lobes, caractérisé par deux lèvres à bords libres effilés, la distance décomptée parallèlement à l'axe de symétrie du siège, entre la face cylindrique et les lèvres étant plus petite que la distance entre la face cylindrique et les lobes. Lorsque le siège vient dans une gorge du papillon, la face intérieure est cylindrique et la face extérieure est torique. Lorsque le siège vient dans une gorge du corps, la face extérieure est cylindrique et la face intérieure est torique.

De préférence, le siège a une rainure en V débouchant sur la face cylindrique.

Aux dessins annexés, donnés uniquement à titre d'exemple :
la figure 1 est une vue en coupe d'un robinet à papillon décalé suivant l'invention entre deux brides de tuyauterie, suivant l'invention en partie haute de la figure et suivant la technique antérieure en partie basse de la figure.
les figures 2 et 3 sont des vues en coupe partielle du corps, du papillon et du siège suivant des modes de réalisation existants,
les figures 4a et 4b ainsi que 5a et 5b sont des vues semblables aux figures 2 et 3 d'un mode de réalisation suivant l'invention avec le siège fixé soit dans le corps soit sur le bord du papillon,
les figures 6 et 7 sont des vues à plus grande échelle illustrant l'effet autoclave d'un mode de réalisation suivant l'invention,
la figure 8 est une section transversale du siège montrant la structure du siège en deux parties principales reliées entre elles par un col étroit.
la figure 9 est une vue en coupe d'un mode de réalisation d'un siège suivant l'invention,
la figure 10 est une vue en coupe d'une agrafe, et
les figures 11 à 13 sont des vues en coupe de variantes de siège suivant l'invention.

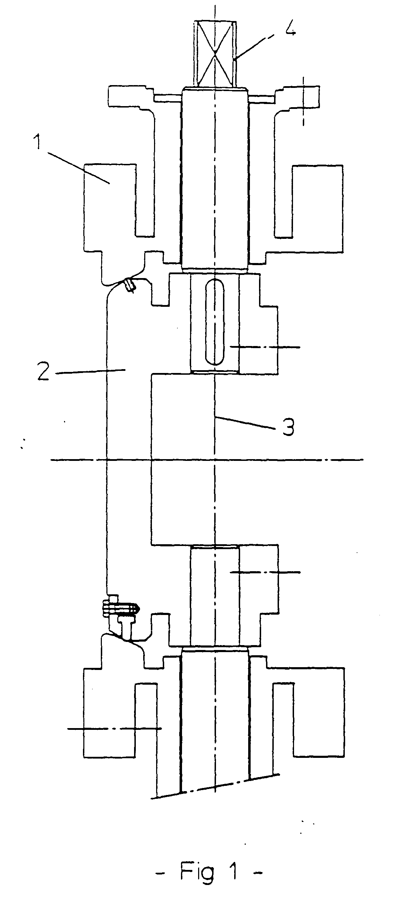

Le robinet à papillon décalé suivant l'invention est monté à la figure 1 entre deux brides d'une tuyauterie.

Le robinet comporte essentiellement un corps 1 tubulaire cylindrique et un papillon 2 en forme de disque monté tournant par rapport à un axe 3 décalé par rapport au plan du papillon et parallèle à ce plan. Un actionneur 4 du robinet permet de faire tourner le papillon par rapport à l'axe 3. Cet axe 3 est également décentré par rapport à l'axe de la tuyauterie.

Entre le corps 1 et le papillon 2 se trouve un siège 5 d'une seule forme en en forme d'anneau que l'on voit mieux aux figures 2 à 8. A la partie inférieure de la figure 1 (opposée à l'actionneur) est représentée un mode de réalisation courant, tandis qu'à la partie supérieure (côté actionneur) est représenté un mode de réalisation selon l'invention.

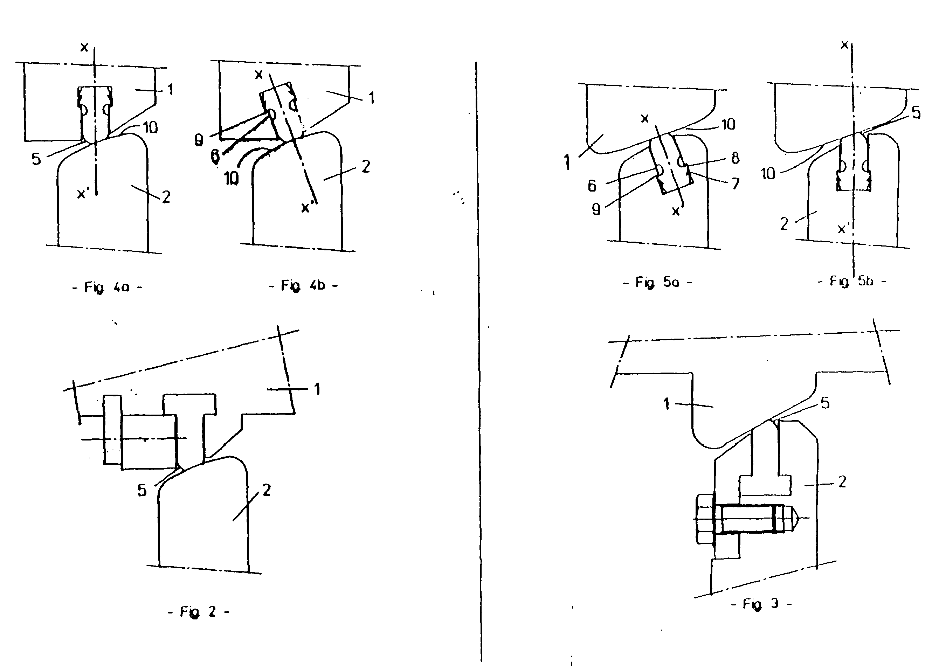

Les figures 2 et 3 montrent le détail de modes de réalisation courant avec éléments auxiliaires de fixation du siège respectivement sur corps et sur le bord du papillon.

Aux figures 4a et 4b, le siège 5 de section transversale en forme de T est encliqueté dans une gorge 6 fermée (trou borgne) de section transversale en forme de T du corps 1. Le siège 5 comporte deux lèvres 8 et deux lobes 7, qui s'appliquent à la paroi de la gorge à une profondeur plus grande qu'un épaulement 9 définissant la barre du T de la gorge 6. La figure 4a montre une disposition où le plan XX' de symétrie du siège est incliné par rapport à la portée 10 du papillon et la figure 4b la position optimale où le plan XX' de symétrie du siège est perpendiculaire à la portée 10 d'étanchéité.

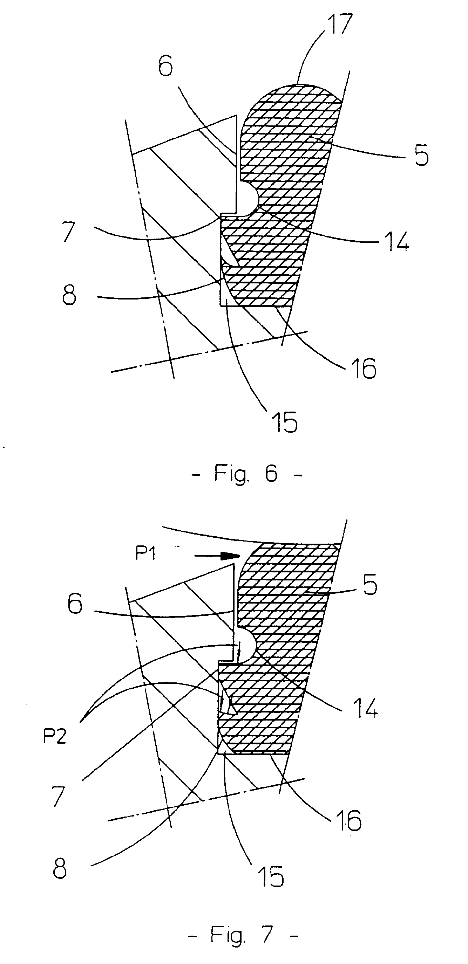

Il en va de même aux figures 5a et 5b, mais cette fois-ci, la gorge 6 de réception du siège 5 est usinée sur le bord périphérique du papillon 2 et la portée 10 est sur le corps 1.

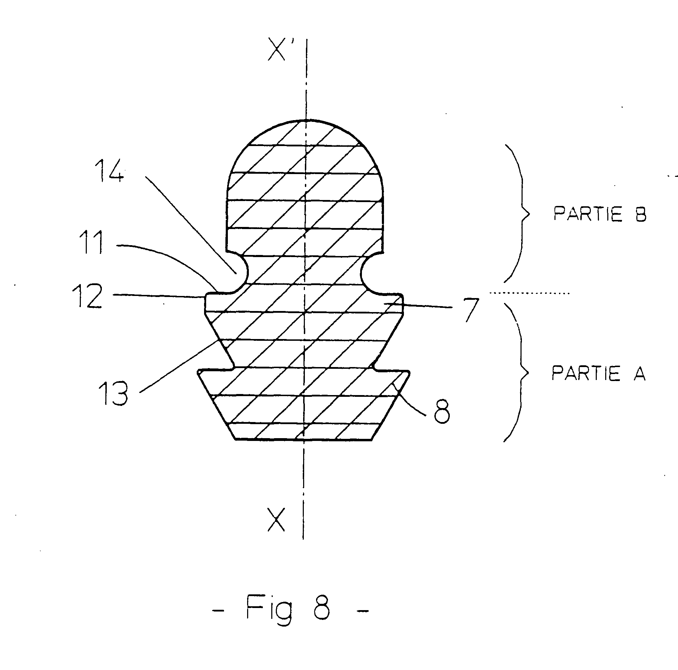

La figure 6 représente la position du siège 5 dans le papillon 2 lorsqu'il n'y a pas de pression dans la tuyauterie, tandis qu'à la figure 7, la pression est illustrée par une flèche unique P1, la pression s'appliquant sur les lèvres 8 et les lobes 7 du siège étant représentée par des flèches multiples P2 lorsque le robinet est fermé avec le siège en contact avec la portée d'étanchéité. On voit à la figure 7 que cette pression déforme de plus en plus les lèvres 8, parce qu'elles sont effilées et souples et dirigées dans le sens opposé au fond de la gorge. Le bord effilé d'une lèvre 8 est plus éloigné du fond de la gorge que ne l'est le reste de la lèvre 8. Chaque lobe 7 a une surface parallèle à la paroi latérale de la gorge avec laquelle il vient en contact. Les lèvres s'appliquent de plus en plus à la paroi intérieure de la gorge 6, ce qui assure un effet autoclave et renforce l'étanchéité entre le siège et la gorge. La figure 8 détaille la section transversale du siège montrant les deux parties principales :
- la partie A " statique " en forme de harpon ayant deux lobes 7 et lèvres 8 assurant l'accrochage positif dans la gorge ainsi que l'étanchéité statique du siège dans cette même gorge, En section transversale, le lobe 7 suit immédiatement un col 14 par une face 11 perpendiculaire à l'axe XX' (qui est la trace du plan de symétrie du siège), suivie elle-même d'une face tronquée 12 sensiblement parallèle à l'axe XX', elle-même suivie d'une face 13 inclinée par rapport à l'axe XX' et s'en rapprochant à partir de la face 12. Il en va de même pour la lèvre 8 qui, toutefois, n'a pas de face tronquée.
- la partie B " dynamique " de forme torique coopérant avec la portée d'étanchéité pour assurer l'étanchéité dynamique du robinet,
- le col 14 de liaison entre les deux parties principales allouant un indépendance de mouvement radial (suivant l'axe XX') de la partie B par rapport à la partie A.

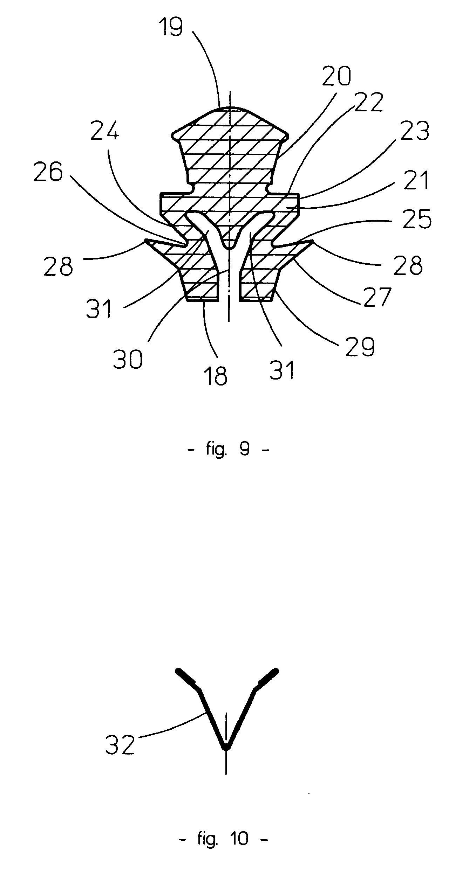

La figure 9 est une vue en coupe transversale d'un siège suivant l'invention. Ce siège comprend une face 18 intérieure cylindrique et une face 19 extérieure torique au moins en partie, il comporte, de haut en bas suivant la figure 9, une partie 20 supérieure suivie de deux lobes 21 latéraux en saillie défini par une face 22 perpendiculaire à l'axe XX' de symétrie du siège, la face 22 étant suivie, suivant un coude à angle droit d'une face 23 parallèle à l'axe XX' et celle-ci étant suivie à son tour d'une face 24 inclinée à peu près à 45 degrés et rentrante. Cette face 24 définit avec une face 25 suivante après une partie arrondie 26, une rainure. Il va de soi que le siège étant symétrique par rapport à l'axe XX', il y a deux rainures symétriques l'une de l'autre par rapport à cet axe. A la face 25 fait suite une face 27 se coupant avec la face 25 suivant un angle aigu 28 ménageant une pointe en section transversale. Les faces 25 et 27 définissent ainsi une lèvre souple et effilée. Les deux pointes 28 définissent entre elles la plus grande largeur du siège.

A la suite de la face 27 vient une face 29, qui définit une partie de base du siège définissant elle-même la face 18 cylindrique d'appui au fond de gorge. Dans cette face 18 débouche une rainure 30 en V, les prolongements imaginaires des directions des branches 31 du V coupant les faces 22.

Dans cette rainure 30 sont placées de manière équidistante des agrafes 32 élastiques en forme de V, telles que représentées à la figure 10, qui tendent à repousser notamment la matière du siège se trouvant entre les faces 22, 23 et 24 vers l'extérieur.

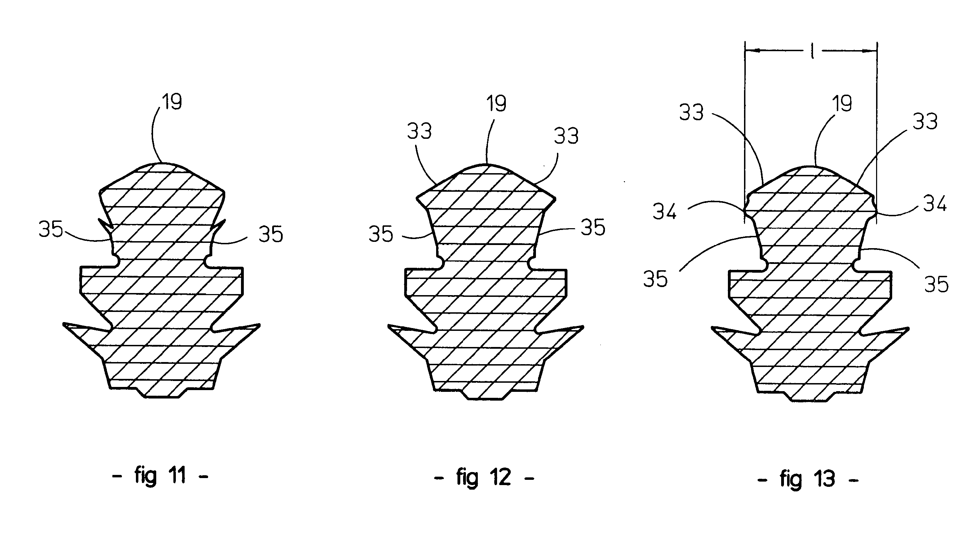

A la figure 11, dans la partie B "dynamique" du siège, on a ménagé sur chacune des faces 32 en regard des parois de la gorge 6 et en partie haute, une lèvre courte.

Sur le plan fonctionnel, cette lèvre courte joue le même rôle que la lèvre 8 ou 25, 27, 28 sur laquelle s'exercent les forces de pression P2.

La lèvre courte est conçue pour interférer avec la paroi de la gorge qui la rabat légèrement en créant une concavité vers l'extérieur de la gorge.

La lèvre courte joue ainsi le rôle d'une première barrière d'étanchéité à laquelle subviendra la lèvre 8 ou 25, 27, 28 en cas d'insuffisance fonctionnelle.

La lèvre courte agit aussi de façon autoclave c'est-à-dire que plus la pression augmente, meilleure est l'étanchéité.

Dans les figures 12 et figure 13, la partie dynamique du siège qui est en contact avec la pièce opposée (corps ou papillon) -19- est une portion de tore.

Selon la réalisation montrée par les figures 11, 12, 13 cette portion de tore est prolongée par deux éléments 33 qui lui sont tangents et qui forment des renflements.

A la figure 12, on voit que le point de rencontre de la face 35 avec l'élément 33, n'a pas été conservé. Au contraire on a formé un bec qui lorsque le siège sera monté dans sa gorge 6 viendra en obturer l'entrée créant ainsi un premier obstacle à la pénétration du fluide dans la gorge 6.

A la figure 13, on a ménagé en partie haute de la face 35 un renflement 34 et son symétrique.

Ces renflements de forme sensiblement semi-circulaire en section rentrent dans la gorge au montage et, parce qu'ils sont comprimés, développent contre les parois de la gorge une pression de contact que l'on veut supérieure à celle du fluide.

La cote de la largeur ℓ du siège à l'état libre prise au sommet des renflements est donc supérieure à la cote correspondante de la gorge.

Ces différents types de barrières d'étanchéité réalisées à l'entrée de la gorge 6 ont pour rôle, de constituer une protection primaire avant celle des lèvres 8 et 25, 27, 28.

## Revendications

1. Robinet comprenant un corps (1) tubulaire cylindrique et un papillon (2) en forme de disque, monté tournant par rapport à un axe (3) décalé par rapport au plan du papillon (2) et parallèle à ce plan, et un siège (5) monobloc en anneau rapporté dans une gorge (6) annulaire fermée, donc un trou borgne, sur l'un de la face intérieure du corps (1) et du bord du papillon (2), l'autre d'entre eux venant par une portée (10) d'étanchéité en contact avec le siège (5) dans une position de fermeture du robinet et s'en écartant dans une position d'ouverture, le siège comprenant deux parties latérales en saillie symétriques l'une de l'autre, **caractérisé en ce que** chaque partie en saillie est constituée sous la forme d'une lèvre (8) d'étanchéité, dont le bord libre effilé est ramené vers l'intérieur de la gorge (6) par contact avec la face latérale de la gorge (6) et qui est dirigée dans le sens opposé à celui allant vers le fond de la gorge (6).

2. Robinet suivant la revendication 1, **caractérisé en ce que** le siège comprend deux lobes (7) latéraux symétriques l'un de l'autre et la distance entre le fond de la gorge (6) et les lèvres (8) étant plus petite que la distance entre le fond de la gorge (6) et les lobes (7).

3. Robinet suivant la revendication 2, **caractérisé en ce que** chaque lobes (7) vient en contact avec la paroi latérale de la gorge (6) suivant une surface.

4. Robinet suivant l'une des revendications 2 ou 3, **caractérisé en ce que** la gorge (6) comporte deux épaulements symétriques l'un de l'autre, en étant notamment en forme de T, et les faces des lobes (7), éloignées du fond de la gorge (6), sont en contact avec les épaulements.

5. Robinet suivant l'une des revendications précédentes, **caractérisé en ce que** le siège comporte une rainure (30) en V dont la pointe est tournée vers le fond de la gorge (6) et plusieurs agrafes (32) élastiques en V sont réparties le long de la rainure.

6. Robinet suivant les revendications 4 et 5, **caractérisé en ce que** le prolongement imaginaire des branches (31) du V coupe l'épaulement.

7. Robinet suivant l'une des revendications précédentes, **caractérisé en ce que** le siège à une face (18) cylindrique et deux renflements (34) symétriques l'un de l'autre, la distance entre un renflement et la face cylindrique étant plus grande que la distance entre le lobe et la face cylindrique.

8. Siège annulaire ayant une face intérieure (extérieure) cylindrique, une face extérieure (intérieure) torique comprenant deux lobes, et deux lèvres à bord libre effilé, la distance entre la face cylindrique et les lèvres étant plus petite que la distance entre la face cylindrique et les lobes, **caractérisé par** une rainure en V débouchant sur la face cylindrique.

9. Siège suivant la revendication 8, **caractérisé par** deux renflements (34) symétriques l'un de l'autre, la distance entre un renflement et la face cylindrique étant plus grande que la distance entre le lobe et la face cylindrique.

10. Siège suivant la revendication 8 ou 9, **caractérisé par** des agrafes élastiques en V réparties le long de la rainure.
